# EUROPÄISCHE PATENTANMELDUNG

(11) **EP 1 653 203 A1**
(43) Veröffentlichungstag der Anmeldung: **03.05.2006**
(21) Anmeldenummer: 04024909.6
(22) Anmeldetag: 20.10.2004
(51) Int. Cl.: G01J 1/42

(54) **Optisches Leistungsmessgerät**

(71) Anmelder: Acterna Germany GmbH, 72800 Eningen (DE)
(72) Erfinder: Bechstein, Ralph, 72760 Reutlingen (DE); Bach, Roland, 72667 Schlaitdorf (DE)
(74) Vertreter: Klocke, Peter

(57) **Zusammenfassung**

Die vorliegende Erfindung betrifft ein Gerät zum Messen der optischen Energie, welche über ein Lichtwellenleiterkabel übertragen wird, insbesondere ein optisches Eingangsteil zur Dämpfungs- und Pegelmessung. Im optischen Eingangsteil werden durch automatisch gesteuertes Einbringen von variablen Bewertungsfiltern in den optischen Strahlengang, die charakteristischen Eigenschaften des optischen Signals, wie zum Beispiel Wellenlänge, Polarisation und Leistung bestimmt. Die kleine Bauform und die geringe Leistungsaufnahme ermöglichen den Betrieb auch in Handgeräten.

## Beschreibung

Die vorliegende Erfindung betrifft ein Gerät zum Messen der optischen Energie, welche über ein Lichtquellenleiterkabel übertragen wird, mit einem Anschluss zur Einkopplung der optischen Strahlung, mit mindestens einem in den Strahlengang einbringbaren Filter zum Bewerten der optischen Strahlung und einem optischen /elektrischen Wandler mit angeschlossener Elektronik zur Detektierung und Auswertung der optischen Strahlung sowie ein optisches Eingangsteil für ein optisches Messgerät zur Dämpfungs- und Pegelmessung.

Lichtwellenleiterkabel sind mittlerweile die vorherrschenden Übertragungsmedien in der Telekommunikation. Die Vorteile der Faseroptik sind allgemein bekannt, wobei die hohe Bandbreite dabei hervorzuheben ist. Der Einsatz einer Faseroptik im Gegensatz zu herkömmlichen Übertragungswegen ist jedoch auch mit einigen Nachteilen verbunden. Die Nachteile gehen größtenteils auf die Art und Weise zurück, wie Daten über das Lichtwellenleiterkabel übertragen werden. Die Daten werden in Lichtimpulse codiert, die durch das Lichtwellenleiterkabel übertragen werden. Diese Lichtwellen reflektieren sich aufgrund der verschiedenen Brechungsindizes der Faseroptik und der umgebenden Ummantelung in der Faseroptik gegenseitig. Bei der Ummantelung handelt es sich um mit Verlust behaftetes Glas, das den leitenden Kern umgibt. Aufgrund dieser Anordnung ist das Lichtwellenleiterkabel im Bezug auf geringfügige Störungen des Kabels empfindlich einschließlich mechanischer Belastungen wie etwa Biegungen, Verdrehungen und Klemmungen der Faser selbst.

Typischerweise umfasst ein faseroptisches Übertragungssystem eine Mehrzahl von einzelnen Übertragungspfaden, von denen jeder aus einer Mehrzahl von optischen Fasern besteht, die miteinander durch Kleben oder Verschmelzen verbunden sind. Probleme entstehen bei der Wartung solcher Systeme, insbesondere dann, wenn ein gegebenen Übertragungspfad unakzeptable Leistungsverluste aufweist. In solchen Fällen ist es notwendig, die Energieübertragung in einer großen Anzahl von optischen Fasern zu messen und die charakteristischen Eigenschaften des optischen Signals wie zum Beispiel Wellenlänge, Polarisation und Leistung zu bestimmen. Dazu wird bekannter Weise das optische Signal in ein elektrisches Signal umgewandelt.

Aus der DE 697 21 405 T2 ist ein Verfahren bekannt, bei dem die codierte optische Strahlung in eine digitale Darstellung umgewandelt wird. Dazu wird das optische Signal über einen Lichtwellenleiter in das Messgerät eingekoppelt und dort von einem Fotoelement in ein codiertes elektrisches Signal gewandelt, anschließend verstärkt und durch eine Messschaltung ausgewertet. Zur Bewertung der charakteristischen Eigenschaften des optischen Signals wie zum Beispiel Wellenlänge, Polarisation und Leistung, ist es bekannt, selektierende oder dämpfende optische Filterelemente in den Strahlengang vor dem Fotoelement anzuordnen. Üblicherweise erfolgt das Einbringen und das Wechseln der Bewertungsfilter bei Handmessgeräten manuell, wobei das Messgerät außer Betrieb genommen wird.

Der Erfindung liegt daher die Aufgabe zugrunde, ein optisches Eingangsteil für ein Leistungsmessgerät vorzuschlagen, das in ein optisches Leistungsmessgerät integrierbar oder daran adaptierbar ist und die Möglichkeit bietet, auch während des Betriebs des Messgeräts Bewertungsfilter in den Strahlengang einzubringen und dessen kleine Bauform und geringe Leistungsaufnahme den Einsatz auch bei batteriebetriebenen Handgeräten ermöglichen.

Diese Aufgabe wird erfindungsgemäß für ein optisches Leistungsmessgerät mit den Merkmalen des Anspruchs 1 sowie durch ein optisches Eingangsteil mit den Merkmalen des Anspruchs 6 gelöst. Weitere vorteilhafte Ausgestaltungen sind den jeweiligen Unteransprüchen zu entnehmen.

Das erfindungsgemäße optische Leistungsmessgerät dient zur Messung an in Lichtwellenleiterkabeln übertragenen optischen Signalen. Das Leistungsmessgerät weist einen Anschluss zur Einkopplung der optischen Strahlung und einen optischen / elektrischen Wandler mit angeschlossener Elektronik zur Detektierung und Auswertung der eingekoppelten Strahlung auf. Das Gehäuse des Leistungsmessgeräts weist eine abgeschlossene, gegen Schmutz und Feuchtigkeit abgedichtete Kammer auf, in der ein Fotoelement, vorzugsweise eine Fotodiode zum Detektieren des optischen Signals und zum Umwandeln in ein elektrisches Signal, sowie mindestens ein, in den Strahlengang einbringbarer Filter, angeordnet sind.

Diese Kammer mit den darin angeordneten Elementen, zukünftig als optisches Eingangsteil bezeichnet, kann im Innern des Gehäuses angeordnet oder außen am Gehäuse angeordnet bzw. adaptiert sein. Vorzugsweise ist die Kammer, die zukünftig als Gehäuse des optischen Eingangsteils bezeichnet wird, im Innern des Gehäuses an einer Außenwand angeformt.

In einer vorteilhaften Ausgestaltung weist das Gehäuse des optischen Eingangsteils eine Messkammer auf, in der das Fotoelement und die in den Strahlengang einbringbaren Filter angeordnet sind. Am Gehäuse ist ein Anschluss zur Einkopplung der optischen Strahlung in die Messkammer vorgesehen. Der Anschluss ist an einer nach außen weisenden Kammerwand des Eingangsteils angeordnet und weist ein, mit dem Filter und dem Fotoelement fluchtendes Eintrittsfenster für die optische Strahlung auf. Das Eintrittsfenster ist als transparente Scheibe ausgeführt, welche die Messkammer abdichtet und die Filter und das Fotoelement vor Staub und Feuchtigkeit schützt. Um das Eintrittsfenster ist an einer Gehäusewand der Kammer ein nach außen weisender Anschlussflansch zur Aufnahme eines Lichtwellenleiterkabels angeformt. Dort wird zur Einkopplung der optischen Strahlung das Ende des Lichtwellenleiters eingeführt und fixiert. Es ist auch möglich, optische Steckverbinderteile am Anschlussflansch zu befestigen, die das Aufstecken von gebräuchlichen optischen Steckersystemen ermöglichen. Vorteilhafterweise wird das Eintrittsfenster von einer Kollaminationslinse gebildet, die strahlformende Eigenschaften aufweist. Ein aus der Stirnfläche des Lichtwellenleitkabels austretender divergierender Lichtstrahl trifft auf die Kollaminationslinse und wird dort parallelisiert. Dies ist notwendig, um mit der gesamten Strahlung die entfernt liegende aktive Fläche des Fotoelements zu treffen, wobei die Außenfläche der Kollaminationslinse einfach vom Anwender gereinigt werden kann.

In den Strahlengang kann mindestens ein optischer, selektierender oder dämpfender Filter zum Bewerten der optischen Strahlung eingebracht werden, wobei durch unterschiedliche Bewertungsfilter unterschiedliche charakteristische Eigenschaften des optischen Signals gemessen werden können. Zweckmäßigerweise sind dazu mehrere Filter auf einem Filterträger angeordnet, der in der Kammer des Eingangsteils bewegbar gelagert ist. Der Filterträger ist als flaches Teil ausgebildet, auf dem die Filter linear oder kreisförmig angeordnet sind. Die unterschiedlichen Bewertungsfilter sind durch motorische Bewegung des Filterträgers in den Strahlengang einbringbar. Dies kann durch automatisch oder manuell gesteuertes Verschieben bzw. Drehen, abhängig von der Geometrie des Filterträgers, erfolgen.

So kann beispielsweise in der Messkammer ein scheibenförmiger Filterträger angeordnet sein, der mittels einer zentrisch fixierten Welle um seine Mittelachse drehbar gelagert ist. Dabei sind mehrere Filter konzentrisch zu dessen Mittelachse so angeordnet, dass jedes Filter in den Strahlengang durch Drehen des Filterträgers einbringbar ist. Die Filter können in kreisförmigen Vertiefungen fixiert und zweckmäßigerweise in einer leichten Schrägstellung zu optischen Achse angeordnet sein, wodurch eine Reflektionsreduktion des auftreffenden Lichtstrahls erreicht wird. Nachdem das optische Signal das Bewertungsfilter passiert hat, trifft es auf das Fotoelement, das in einer weiteren vorteilhaften Ausgestaltung leicht schräg zur optischen Achse eingebaut ist. Die Messkammer des Gehäuses, in dem sich die Optik befindet, ist mit einem Deckel staubdicht verschlossen.

Vorzugsweise ist an der dem Eintrittsfenster gegenüberliegenden Außenseite der Messkammer ist eine Betätigungsvorrichtung zum Einbringen der Filter in den Strahlengang und eine elektronische Schaltungsleiterplatte angeordnet. Das Einbringen der Filter in den Strahlengang erfolgt durch automatische Bewegung des Filterträgers durch die Betätigungsvorrichtung. Vorteilhafterweise erfolgt die Bewegung des Filterträgers durch einen Ultraschallmotor, der ein auf der Welle des Filterträgers angeordnetes Reibrad antreibt oder im Stillstand das Reibrad fixiert und somit ein ungewolltes Bewegen des Filterträgers verhindert.

Das optische Eingangsteil des Leistungsmessgeräts weist eine Vorrichtung zur berührungslosen Positionserkennung des Filterträgers und zur Rückmeldung der ermittelten Position an eine Steuerelektronik auf. Die Detektierung der Positions des Filterträgers kann dabei optisch durch eine Lichtschranke oder magnetisch durch einen Hallsensor erfolgen. Vorteilhafterweise erfolgt die Positionsbestimmung durch einen Magnetfeldsensor. Zweckmäßigerweise ist auf der Welle des Filterträgers nach dem Reibrad ein Permanentmagnet angeordnet, dessen Magnetfeld von einem gegenüberliegenden Hallsensor ausgewertet wird. Die Auswerteelektronik des Hallsensors ist auf der Schaltungsleiterplatte angeordnet, die fest mit dem Gehäuse des optischen Eingangsteils verbunden ist. Die elektrischen Signale zur Ansteuerung und Anzeige werden von dort an eine Schaltungsplatine des Leistungsmessgerätes weitergeleitet. Die Anschlüsse des Fotoelements, die Streuerleitungen des Ultraschallmotors sowie der Magnetfeldsensorschaltkreis sind mit der Schaltungsleiterplatte elektrisch verbunden. Optional befinden sich auf der Schaltungsleiterplatte noch Mess- und Auswerteschaltungen und ein EEPROM für Kalibrier und Konfigurationsdaten. Dadurch ist das optische Eingangsteil modular fertigbar und ohne Vorortkalibrierung einsetzbar. In einer weiteren vorteilhaften Ausgestaltung sind acht Bewertungsfilter vorgesehen. In Abhängigkeit von der Größe des Kammer und der Positioniergenauigkeit des Filterträgers ist auch eine größere Anzahl von Filtern denkbar.

Nachfolgend wird die Erfindung anhand der begleitenden Zeichnungen an einem Ausführungsbeispiel näher erläutert. Es stellen dar:
- Figur 1: eine perspektivische Ansicht eines erfindungsgemäßen optischen Leistungsmessgeräts.
- Figur 2: eine perspektivische Ansicht eines erfindungsgemäßen optischen Eingangsteils für ein optisches Leistungsmessgerät gemäß Figur 1.
- Figur 3: eine Draufsicht auf das erfindungsgemäßen optischen Eingangsteil gemäß Figur 2.
- Figur 4: eine Frontansicht des erfindungsgemäßen optischen Eingangsteil gemäß Figur 2.

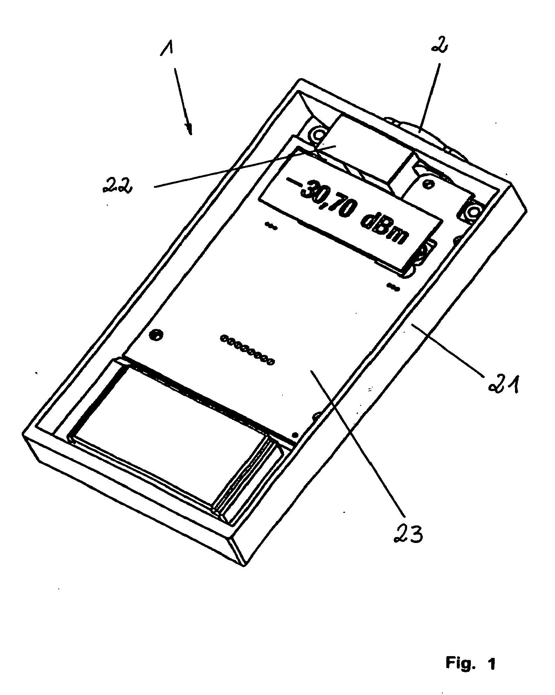

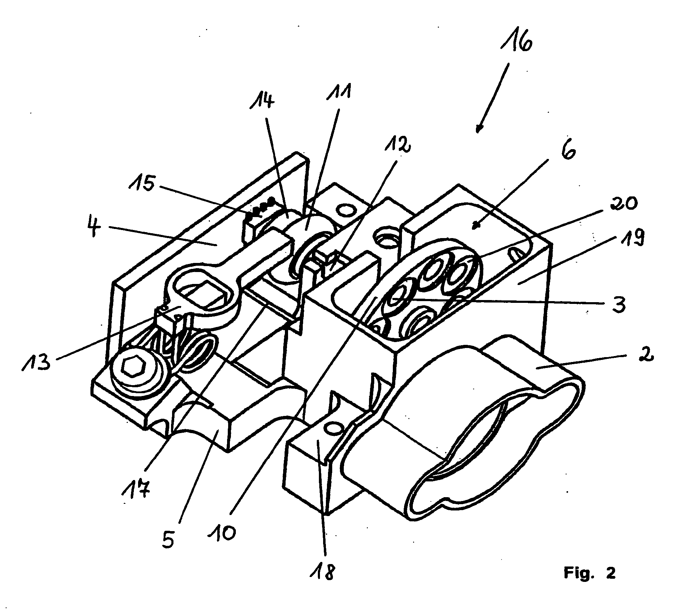

Die Figur 1 zeigt den Aufbau eines erfindungsgemäßen optischen Leistungsmessgeräts. Der Deckel des Gehäuses 21 des Leistungsmessgeräts 1 ist nicht dargestellt. Im Gehäuse 21 ist in einer Kammer 22 ein nicht dargestelltes optisches Eingangsteil 16 angeordnet und mit einer elektronischen Schaltungsplatine 23 verbunden. Die Schaltungsplatine 23 wertet die im optischen Eingangsteil 16 detektierten Strahlungsinformationen aus. An einer Außenwand des Gehäuses 21 ist im Bereich der Kammer 22 ein Anschluss 2 zur Aufnahme eines nicht dargestelltes Lichtwellenleiterkabel angeformt. Ein aus dem Lichtleiterkabel austretender nichtdargestellter Lichtstrahl wird durch ein nicht dargestelltes optisches Eintrittsfenster 7 in das optische Eingangsteil 16 eingekoppelt. Das optische Eingangsteil 16 ist in Figur 2 dargestellt und wird dort detailliert beschrieben.

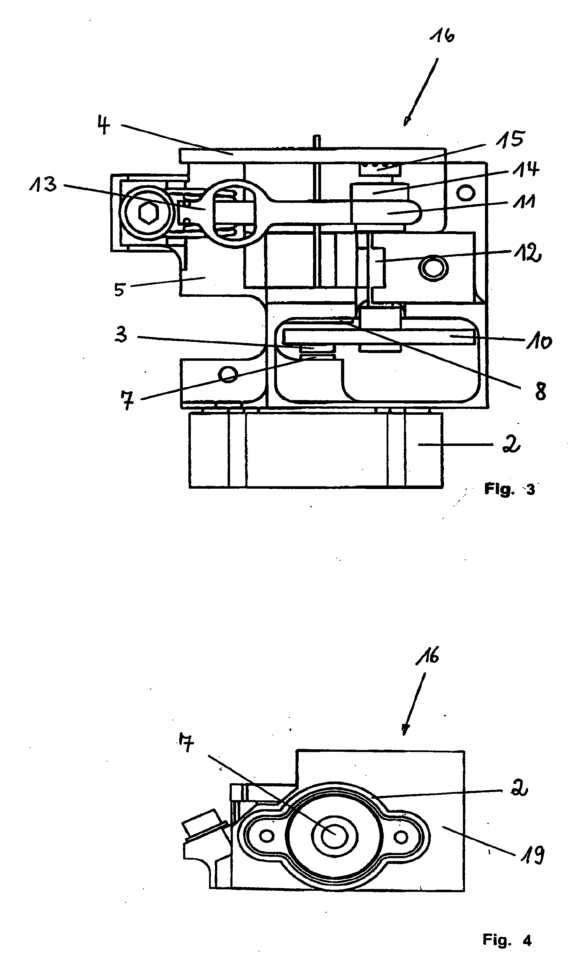

Die Figuren 2 bis 4 zeigen den Aufbau eines erfindungsgemäßen optischen Eingangsteils für ein optisches Leistungsmessgerät, das in ein Gehäuses 21 des Leistungsmessgeräts 1 integriert oder in ein separates Gehäuse 5 eingebaut, am Gehäuse 21 eines Leistungsmessgeräts 1 adaptierbar ist. Die Gehäusewände des Gehäuses 5 sind nicht dargestellt, ebenso wenig der Deckel, der die Optik des optischen Eingangsteils vor Staub schützt.

Auf einem Aufnahmeteil 18 ist ein Filterträger 10, ein Ultraschallmotor 13 und eine elektronische Schaltungsleiterplatte 4 angeordnet. Am Aufnahmeteil 18 ist eine Messkammer 6 angeformt, in der der Filterträger 10 und ein Fotoelement 8 angeordnet sind und durch einen nicht dargestellten Deckel vor Staub und Feuchtigkeit geschützt werden. An einer Außenwand 19 der Messkammer 6 ist ein Anschlussflansch 2 zur Aufnahme eines nicht dargestellten Lichtwellenleiterkabels angeformt. Der aus der Stirnseite des Lichtwellenleiterkabels austretende Lichtstrahl fällt durch ein strahlformendes Eintrittsfenster 7 in der Außenwand 19 in die Messkammer 6 ein, passiert den Filter 3 und fällt auf das Fotoelement 8. Der Filterträger 10 ist scheibenförmig ausgebildet und mittels einer Welle 12 drehbar auf dem Aufnahmeteil 18 gelagert. Auf dem Filterträger 10 sind acht runde, vertiefte Durchbrüche 20 kreisförmig um dessen Mittelachse angeordnet, in denen die Bewertungsfilter 3 aufgenommen sind. In verschiedenen Vorzugsstellungen des Filterträgers 10 fluchten das Ende des Lichtwellenleiters, das Eintrittsfenster 7 der Messkammer 6, ein Filter 3 und das Fotoelement 8 miteinander.

Die Bewertungsfilter 3 werden durch Drehen des Filterträgers 10 durch den Ultraschallmotor 13 in den Strahlengang eingebracht. Dabei übt der Ultraschallmotor 13 über ein, auf der Welle 12 angeordnetes Reibrad 11, ein Drehmoment auf den Filterträger 10 aus. An dem dem Filterträger 10 gegenüberliegenden Ende der Welle 12 ist ein Permanentmagnet 14 auf der Welle 12 angeordnet, dessen Magnetfeld über einen, dem Permanentmagnet 14 gegenüberliegenden Halisensor 15 berührungslos detektiert wird, wobei die Drehlage des Filterträgers 10 an eine auf der Schaltungsleiterplatte 4 angeordnete, nicht dargestellte Auswerteschaltung weiter gemeldet wird. Die Schaltungsleiterplatte 4 ist am Aufnahmeteil 18 befestigt. Die Anschlüsse des Fotoelements 8 sind durch ein Verbindungskabel 17, die Steuerleitungen des Ultraschallmotors 13 sowie des Hallsensors 15 sind durch nicht dargestellte Leitungen mit der Schaltungsleiterplatte 4 verbunden.

## Patentansprüche

1. Optisches Leistungsmessgerät (1) zum Messen der optischen Energie, welche über ein Lichtwellenleiterkabel übertragen wird, mit einem Anschluss (2) zur Einkopplung der optischen Strahlung, mit mindestens einem in den Strahlengang einbringbaren Filter (3) zum Bewerten der optischen Strahlung und einem optischen / elektrischen Wandler mit angeschlossener Elektronik zur Detektierung und Auswertung der optischen Strahlung, die in oder an einem Gehäuse (21) angeordnet sind, **dadurch gekennzeichnet, dass** das Gehäuse (21) eine abgeschlossene, gegen Schmutz und Feuchtigkeit abgedichtete Kammer (22) aufweist, in der eine Messkammer (6) mit einem strahlformenden kollimierenden Eintrittsfenster (7) für die optische Strahlung, in welcher ein Fotoelement (8) zum Detektieren des optischen Signals und mindestens ein, in den Strahlengang einbringbarer Filter (3) angeordnet ist.

2. Optisches Leistungsmessgerät nach Anspruch 1, **dadurch gekennzeichnet, dass** der Filter (3) auf einem Filterträger (10) angeordnet ist und der Filterträger (10) in der Messkammer (6) der Kammer (22) des Gehäuses (21) bewegbar gelagert ist.

3. Optisches Leistungsmessgerät nach Anspruch 1, **dadurch gekennzeichnet, dass** auf der dem Eintrittsfenster (7) gegenüberliegenden Innenseite der Kammer (22) eine Betätigungsvorrichtung zum Einbringen des Filters (3) in den Strahlengang und eine elektronische Schaltungsleiterplatte (4) angeordnet sind.

4. Optisches Leistungsmessgerät, nach einem der vorgenannten Ansprüche, **dadurch gekennzeichnet, dass** der Filter (3) durch Bewegen des Filterträgers (10) in den Strahlengang eingebracht wird und das Bewegen des Filterträgers (10) automatisch durch Einwirkung eines Ultraschallmotors (13) erfolgt.

5. Optisches Leistungsmessgerät nach Anspruch 2, **dadurch gekennzeichnet, dass** das Leistungsmessgerät (1) eine Vorrichtung (14, 15) zur berührungslosen Positionserkennung des Filterträgers (10) aufweist.

6. Optisches Eingangsteil (16) für ein optisches Leistungsmessgerät (1) zum Messen der optischen Energie, welche über ein Lichtwellenleiterkabel übertragen wird, mit einem Anschluss (2) zur Einkopplung der optischen Strahlung, **dadurch gekennzeichnet, dass** das optische Eingangsteil (16) mindestens einen, in den Strahlengang einbringbaren Filter (3) zum Bewerten der optischen Strahlung und ein Fotoelement (8) zum Detektieren des optischen Signals aufweist, die in einer abgeschlossenen, gegen Schmutz und Feuchtigkeit abgedichteten Messkammer (6) im Innern eines Gehäuses (5) angeordnet sind, wobei das Gehäuse (5) ein strahlformendes kollimierendes Eintrittsfenster (7) zur Einkopplung der optischen Strahlung in die Messkammer (6), sowie eine elektrischen Schaltungsleiterplatte (4) mit einer Messschaltung zur Detektierung und Auswertung der optischen Strahlung (7) aufweist und die Messkammer (6) an einer Außenwand (19) des Gehäuses (5) angeformt ist.

7. Optisches Eingangsteil nach Anspruch 6, **dadurch gekennzeichnet, dass** der Filter (3) auf einem Filterträger (10) angeordnet ist und der Filterträger (10) in der Messkammer (6) des Gehäuses (5) bewegbar gelagert ist.

8. Optisches Eingangsteil nach Anspruch 6, **dadurch gekennzeichnet, dass** auf der dem Eintrittsfenster (7) gegenüberliegenden Seite der Messkammer (6) eine Betätigungsvorrichtung zum Einbringen des Filters (3) in den Strahlengang und eine elektronische Schaltungsleiterplatte (4) angeordnet sind.

9. Optisches Eingangsteil nach einem der vorgenannten Ansprüche 6 bis 8, **dadurch gekennzeichnet, dass** der Filter (3) durch Bewegen des Filterträgers (10) in den Strahlengang eingebracht wird und das Bewegen des Filterträgers (10) automatisch durch Einwirkung eines Ultraschallmotors (13) erfolgt.

10. Optisches Eingangsteil nach Anspruch 7, **dadurch gekennzeichnet, dass** das Leistungsmessgerät (1) eine Vorrichtung (14, 15) zur berührungslosen Positionserkennung des Filterträgers (10) aufweist.

## Geänderte Patentansprüche

### Geänderte Patentansprüche gemäss Regel 86(2) EPÜ.

**1.** Optisches Leistungsmessgerät (1) zum Messen der optischen Energie, welche über ein Lichtwellenleiterkabel übertragen wird, mit einem Anschluss (2) zur Einkopplung der optischen Strahlung, mit mindestens einem in den Strahlengang einbringbaren Filter (3) zum Bewerten der optischen Strahlung und einem Fotoelement (8) als optisch/elektrischer Wandler zur Detektierung der optischen Strahlung und mit einer elektronischen Schaltungsleiterplatte (4) zur Auswertung des detektierten Signals, **dadurch gekennzeichnet, dass** das der Filter (3) und das Fotoelement (8) in einer abgeschlossenen, gegen Umwelteinflüsse geschützten Messkammer (6) eines optischen Eingangsteils (16) angeordnet sind, und das optischen Eingangsteil (16) eine Kollimationslinse (7) als strahlformendes Eintrittsfenster für die optische Strahlung aufweist, die die Strahlung auf das Fotoelement (8) fokussiert.

**2.** Optisches Leistungsmessgerät nach Anspruch 1, **dadurch gekennzeichnet, dass** der Filter (3) auf einem Filterträger (10) angeordnet ist, der in der Messkammer (6) bewegbar gelagert und zwischen der Kollimationslinse (7) und dem Fotoelement (8) in den Strahlengang einbringbar ist.

**3.** Optisches Leistungsmessgerät nach Anspruch 1, **dadurch gekennzeichnet, dass** das optische Eingangsteil (16) einen Antrieb (24) zum automatischen Einbringen des Filters (3) in den Strahlengang aufweist.

**4.** Optisches Leistungsmessgerät, nach Anspruch 3, **dadurch gekennzeichnet, dass** der Antrieb (24) einen Ultraschallmotor (13) aufweist.

**5.** Optisches Leistungsmessgerät nach einem der vorangegangenen Ansprüche, **dadurch gekennzeichnet, dass** das optische Eingangsteil (16) Detektionsmittel (14, 15) zur berührungslosen Positionserkennung des Filterträgers (10) aufweist.

**6.** Optisches Leistungsmessgerät nach einem der vorangegangenen Ansprüche, **dadurch gekennzeichnet, dass** die Schaltungsleiterplatte (4), der Antrieb (24) sowie die Detektionsmittel (14, 15) außerhalb der Messkammer (6) des optischen Eingangsteils (16) angeordnet sind.

**7.** Optisches Leistungsmessgerät nach einem der vorangegangenen Ansprüche, **dadurch gekennzeichnet, dass** das optischen Eingangsteil (16) des Leistungsmessgeräts (1) im Innern eines Gehäuses (21) des Leistungsmessgeräts (1) angeordnet ist.

**8.** Optisches Leistungsmessgerät nach einem der vorangegangenen Ansprüche, **dadurch gekennzeichnet, dass** das optischen Eingangsteil (16) des Leistungsmessgeräts (1) außen am Gehäuse (21) des Leistungsmessgeräts (1) adaptiert ist.
